# EUROPEAN PATENT APPLICATION

(11) **EP 3 669 975 A1**
(43) Date of publication of application: **24.06.2020**
(21) Application number: 18846916.7
(22) Date of filing: 02.08.2018
(51) Int. Cl.: B01D 71/02, B01D 63/00, B01D 69/10, B01D 69/12, C04B 41/85

(54) **CERAMIC FILTER AND MANUFACTURING METHOD THEREFOR**

(30) Priority: 18.08.2017 JP 2017158027
(71) Applicant: NGK Insulators, Ltd., Nagoya-shi, Aichi 467-8530 (JP)
(72) Inventor: KOUKETSU, Takashi, Nagoya-city Aichi 467-8530 (JP)
(74) Representative: Mewburn Ellis LLP
(86) International application number: PCT/JP2018/029088
(87) International publication number: WO 2019/035366

(57) **Abstract**

A ceramic filter includes a base member, a filtration membrane, and a sealing layer. The base member is formed of a ceramic porous body. The filtration membrane is formed on a surface of the base member. The sealing layer is formed at an end portion of the base member. The sealing layer includes a material identical to a material included in the base member and a material identical to a material included in the filtration membrane. The sealing layer has a maximum pore diameter of less than or equal to 1.0 µm as measured by mercury intrusion porosimetry.

## Description

### Technical Field

This specification discloses a ceramic filter and a method for manufacturing the ceramic filter.

### Background Art

In the related art, a ceramic filter provided with a sealing layer formed on an end surface of a base member is proposed; the sealing layer has a porosity of less than or equal to 10%, and the sealing layer includes a dense ceramic material and has a crystallinity of greater than or equal to 80% (see Patent Literature 1, for example). In the ceramic filter, a sealed region provided at an end portion of the base member has improved corrosion resistance and strength.

### Citation List

### Patent Literature

PTL 1: JP 2016-43294 A

### Summary of Invention

### Technical Problem

In the ceramic filter described in Patent Literature 1, the sealing layer is configured to have a porosity of less than or equal to 10%, and the sealing layer is configured to include a dense ceramic material and have a crystallinity of greater than or equal to 80%, and, consequently, corrosion resistance and strength are improved. However, the improvement is still insufficient, and there has been a need to further increase durability.

The present disclosure is made in view of such a problem. Principal objects of the present disclosure are to provide a ceramic filter in which a sealing layer formed at an end portion of a base member has increased durability and to provide a method for manufacturing such a ceramic filter. Solution to Problem

The present inventors diligently performed studies to achieve the principal objects described above and found that the durability of a sealing layer can be improved by forming a sealing material from a material identical to a material included in the base member and a material identical to a material included in a filtration membrane, and further, by ensuring that a maximum pore diameter, as measured by mercury intrusion porosimetry, is within a suitable range. Accordingly, the present inventors completed the invention disclosed in this specification.

That is, a ceramic filter disclosed in this specification is as follows. The ceramic filter includes a base member, a filtration membrane, and a sealing layer. The base member is formed of a ceramic porous body. The filtration membrane is formed on a surface of the base member. The sealing layer is formed at an end portion of the base member. The sealing layer includes a material identical to a material included in the base member and a material identical to a material included in the filtration membrane. The sealing layer has a maximum pore diameter of less than or equal to 1.0 µm as measured by mercury intrusion porosimetry.

Furthermore, a method for manufacturing a ceramic filter disclosed in this specification is as follows. The ceramic filter includes a base member and a filtration membrane. The base member is formed of a ceramic porous body. The filtration membrane is formed on a surface of the base member. The method includes a sealing layer forming step. In the sealing layer forming step, a raw material is formed on an end portion of the base member by spraying, and thereafter the raw material is fired. The raw material includes a material identical to a material of the base member and a material identical to a material of the filtration membrane.

### Advantageous Effects of Invention

In the ceramic filter and the method for manufacturing the ceramic filter disclosed in this specification, a sealing layer formed at an end portion of a base member has increased durability. A reason for this is believed to be as follows. For example, when a solution, such as an acid solution or an alkaline solution, is used in a ceramic filter, the solution exerts an influence on the interface between a base member or a filtration membrane and a sealing layer, which can result in a state in which the sealing layer does not function. In contrast, in the present disclosure, since the sealing layer includes a material identical to a material of the base member and a material identical to a material of the filtration membrane, the sealing layer has a corrosion resistance and the like similar to those of the base member and the filtration membrane, and as a result, the influence on the interface can be reduced. Furthermore, the sealing layer has a reduced maximum pore diameter, which inherently suppresses a solution, such as an acid solution or an alkaline solution, from reaching the interface. Consequently, according to the present disclosure, the sealing layer formed at an end portion of the base member has increased durability.

### Brief Description of Drawings

Fig. 1 is a schematic diagram of a configuration of a ceramic filter 10.
Fig. 2 is a schematic diagram of a foaming pressure gauge 30.
Fig. 3 presents graphs illustrating a relationship between the duration of a treatment performed with acid and alkaline solutions and a foaming pressure.
Fig. 4 presents SEM photographs of Experimental Example 9 and Experimental Example 3, in which cross sections after a corrosion resistance test are shown.

### Description of Embodiments

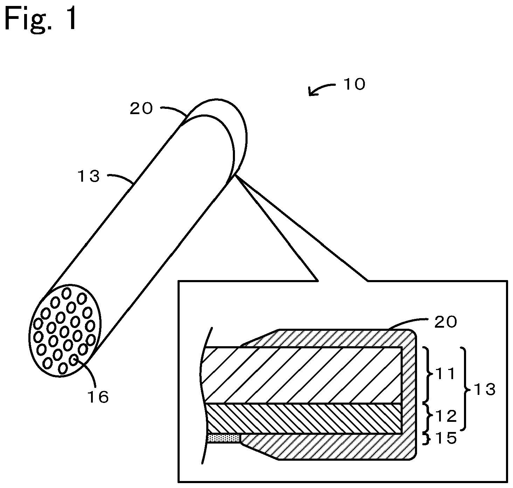

Embodiments for implementing the present disclosure will now be described with reference to the drawings. Fig. 1 is a schematic diagram of a configuration of a ceramic filter 10, which is an embodiment disclosed in this specification. The ceramic filter 10 of the embodiment is configured as a filter for filtering solids present in a solution. The ceramic filter 10 includes a porous base member 13, a filtration membrane 15, and a sealing layer 20.

### (Ceramic Filter)

As illustrated in Fig. 1, the ceramic filter 10 includes the porous base member 13, the filtration membrane 15, and the sealing layer 20. The porous base member 13 is made of a ceramic porous body, which constitutes a partition wall, and cells 16 are defined by the partition wall. The cells 16 serve as fluid flow paths. The filtration membrane 15 is formed on a surface of the partition wall. The sealing layer 20 is formed at an end portion of the porous base member 13. For example, the ceramic filter 10 is used for the production of pure water, cell separation for beverages, and the like. Furthermore, the ceramic filter 10 can be cleaned with an acid solution, an alkaline solution, or the like. As used herein, the phrase "an end portion of the base member" refers to a portion including at least an end surface of the base member; as necessary, the portion may further include a side surface adjacent to the end surface of the base member.

The porous base member 13 is a porous body having an average pore diameter of 1 to 30 µm. A preferred shape of the porous base member 13 is a tubular shape having a single flow passage or a honeycomb or monolithic shape having multiple flow passages that extend parallel to one another. The porous base member 13 may be obtained by firing at a firing temperature of 1200 to 2000°C. The firing time at a maximum temperature is preferably 1 to 2 hours. The porous base member 13 may include a support member 11 and an intermediate membrane 12, which may be formed adjacent to a surface of the support member 11. The support member 11 is formed of at least sintered aggregate. The aggregate includes ceramic particles that constitute a main component of the porous base member 13. It is preferable that the ceramic particles be particles of, for example, aluminum oxide (alumina), titanium oxide (titania), mullite, cordierite, silicon carbide, silicon nitride, aluminum nitride, ceramic waste, or the like. In accordance with the purpose of filtration, appropriate particles are selected. An average particle diameter of the aggregate is preferably approximately 5 to 200 µm and more preferably 50 to 150 µm. The intermediate membrane 12 may be a layer having a pore diameter smaller than that of the support member 11. The intermediate membrane 12 may be formed of particles having an average particle diameter smaller than that of the aggregate of the support member 11. The average particle diameter of the particles is preferably approximately 1 to 100 µm and more preferably 1 to 10 µm. The material of the intermediate membrane may include at least one of aluminum oxide and titanium oxide, for example. Note that the "average pore diameter of the base member" is an average pore diameter measured by mercury intrusion porosimetry. Furthermore, the "average particle diameter" is an average particle diameter measured by using a laser diffraction particle diameter analyzer.

The filtration membrane 15 is a component for ensuring the filtering function of the ceramic filter. The filtration membrane 15 is a ceramic porous member formed on the porous base member 13 and has an average pore diameter smaller than the average pore diameter of the porous base member 13. The filtration membrane 15 may be a membrane obtained by firing a ceramic particle-containing material formed on the porous base member 13. The filtration membrane 15 may be obtained by firing at a firing temperature of 900 to 1600°C. The firing time at a maximum temperature is preferably 1 hour. The ceramic particles that form the filtration membrane 15 may be particles of a material similar to that of the aggregate described above. An average particle diameter of the ceramic particles is preferably approximately 0.1 to 5 µm and more preferably 0.1 to 2 µm. When a smaller particle diameter is selected, the post-firing pore diameter is reduced. Accordingly, an appropriate particle diameter is selected such that a suitable pore diameter is achieved in accordance with the purpose of filtration. Note that the "average pore diameter of the filtration membrane" is an average pore diameter measured by mercury intrusion porosimetry.

The sealing layer 20 is formed to cover an end portion of the porous base member 13. The sealing layer 20 is a sealing member having a low liquid permeability. The sealing layer 20 prevents a fluid that is to be treated from entering the base member from the end surface of the base member. The sealing layer 20 may be formed to cover a portion of the filtration membrane 15 at and near each of the opposite end portions of the porous base member 13. It is preferable that the sealing layer 20 be formed of a material having a higher corrosion resistance than glass, such as aluminum oxide or titanium oxide, and thus the sealing layer 20 includes a material identical to a material included in the base member and a material identical to a material included in the filtration membrane. The sealing layer 20 may include a material in which a material B and a material A are included in a ratio B/A, which is a mass ratio, within a range of 20/80 to 40/60, the material B being identical to a material of the filtration membrane 15, the material A being identical to a material of the intermediate membrane 12. When the ratio is 20/80 or greater, the sealing layer 20 has increased density and improved fluid tightness. When the ratio is 40/60 or less, formation of cracks due to, for example, firing shrinkage can be suppressed. Accordingly, the range is preferable. The ratio is preferably within a range of 25/75 to 35/65 and more preferably approximately 30/70. Furthermore, it is preferable that a molar ratio of Ti to Al and Ti in the sealing layer 20 is within a range of 0.2 ≤ Ti/(Al + Ti) ≤ 0.7. Within this range, the sealing layer 20 has high corrosion resistance and increased mechanical strength. It is more preferable that the molar ratio be within a range of 0.4 ≤ Ti/(Al + Ti) ≤ 0.6.

The sealing layer 20 has a maximum pore diameter of less than or equal to 1.0 µm as measured by mercury intrusion porosimetry. In general, when a treatment liquid, such as an acid solution or an alkaline solution, is used in a ceramic filter, the treatment liquid exerts an influence on the interface between a base member and a sealing layer, which can result in a state in which the sealing layer does not function. In the sealing layer 20, the maximum pore diameter is less than or equal to 1.0 µm, which inherently suppresses a treatment liquid or the like from reaching the interface between the sealing layer 20 and the porous base member 13. Accordingly, the sealing layer 20 has increased durability. It is preferable that the maximum pore diameter be smaller, and it is more preferable that the maximum pore diameter be less than or equal to 0.85 µm.

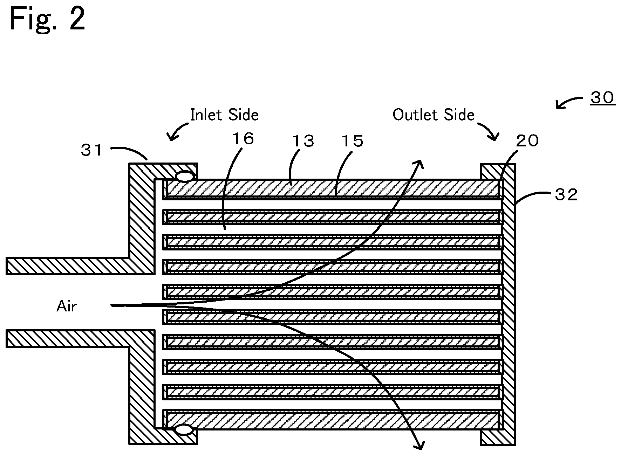

For the sealing layer 20, it is preferable that a foaming pressure be greater than or equal to 0.3 MPa. The foaming pressure is a pressure at which bubbles are formed from the sealing layer 20 when pressurized air is supplied to the ceramic filter 10 in a state in which an end surface is sealed. The foaming pressure can be an index of the fluid tightness of the sealing layer 20. Fig. 2 is a schematic diagram of a foaming pressure gauge 30, which is used to measure the foaming pressure. The foaming pressure gauge 30 includes an air supply member 31, which can be attached to the ceramic filter 10, a sealing member 32, and a thermostatic bath (not illustrated) filled with liquid. The foaming pressure associated with the sealing layer 20 is to be measured as follows in accordance with the Bubble Point Test Method specified in JIS K3832. First, the sealing member 32 is attached to the outlet side of the cells 16, thereby closing one ends of the cells 16, and then the air supply member 31 is secured to the inlet side of the cells 16. The air supply member 31 has a pipe connected thereto. In this state, the sample is immersed in water at 30°C, and, from the air supply member 31, pressurized air is supplied through the pipe into the cells 16. The pressure is held for 30 seconds, and then the presence or absence of bubbles formed in the sealing layer 20 is examined. Pressurization, holding, and the examination of the presence or absence of bubbles are repeated while the pressure is increased. The pressure at which bubbles are observed is recorded as the foaming pressure. It is preferable that the foaming pressure be higher. The foaming pressure is more preferably greater than or equal to 0.32 MPa and even more preferably greater than or equal to 0.35 MPa. In view of, for example, the difficulty in producing the sealing layer 20, it is preferable that the foaming pressure associated with the sealing layer 20 be less than or equal to 1.0 MPa.

The sealing layer 20 may be formed to have a thickness within a range of 150 µm or greater and 500 µm or less. When the thickness is within the range, a sufficient fluid tightness and mechanical strength of the sealing layer 20 is ensured. Furthermore, it is preferable that the sealing layer 20 have a surface roughness Ra (arithmetic mean roughness) of less than or equal to 1.5 µm and more preferably of less than or equal to 1.2 µm. For example, in a case where the ceramic filter is used by being housed in a housing via an O-ring, the sealing between the ceramic filter and the O-ring can be easily increased when the surface roughness of the sealing layer 20 is less than or equal to 1.5 µm. Accordingly, such a surface roughness is preferable. It is preferable that the surface roughness Ra be smaller. The surface roughness Ra is to be measured in accordance with the method specified in JIS B0601. Furthermore, it is preferable that a strength of the sealing layer 20 be a Vickers hardness of greater than or equal to 300 GPa. When the Vickers hardness is greater than or equal to 300 GPa, the ceramic filter 10 exhibits good durability against a physical impact during use. It is more preferable that the Vickers hardness of the sealing layer 20 be greater than or equal to 400 GPa. Furthermore, in terms of limitations of the manufacturing conditions, it is preferable that the Vickers hardness of the sealing layer 20 be less than or equal to 1500 GPa. The Vickers hardness is to be determined as the Hv value (GPa) obtained in accordance with JIS R1610 at a loading of 9.8 N.

### (Method for Manufacturing Ceramic Filter)

A method for manufacturing the ceramic filter 10 will now be described. The manufacturing method is a method for manufacturing a ceramic filter including a porous base member and a filtration membrane, the porous base member being formed of a ceramic porous body, the filtration membrane being formed on a surface of the porous base member. The manufacturing method includes a sealing layer forming step in which a raw material is formed on an end portion of the porous base member by spraying, and thereafter the raw material is fired. The raw material includes a material identical to a material of the porous base member and a material identical to a material of the filtration membrane. Note that the manufacturing method may include a porous base member producing step for producing the porous base member, but this step may be omitted by preparing in advance a porous base member such as that described above.

### (Sealing Layer Forming Step)

In this step, the sealing layer is formed on an end portion of the porous base member. The raw material used in this step may include at least one of aluminum oxide and titanium oxide. Furthermore, in the raw material for the sealing layer, any of the materials mentioned in the above description of the ceramic filter may be appropriately used. For example, in this step, the material used may be a material in which a material B and a material A are included in a ratio B/A, which is a mass ratio, within a range of 20/80 to 40/60, the material B being identical to a material of the filtration membrane, the material A being identical to a material of an intermediate membrane. Furthermore, the ratio B/A is more preferably within a range of 25/75 to 35/65 and even more preferably approximately 30/70. Furthermore, in this step, it is preferable to use, for the sealing layer, a raw material in which a molar ratio of Ti to Al and Ti is within a range of 0.2 ≤ Ti/(Al + Ti) ≤ 0.7. It is more preferable that the molar ratio be within a range of 0.4 ≤ Ti/(Al + Ti) ≤ 0.6.

In this step, the raw material is formed on an end portion of the porous base member by spraying. With spraying, good adhesion is achieved, and the raw material can be sufficiently formed on a surface of the porous base member. Furthermore, by forming the raw material by spraying, the raw material can be suppressed from having a multilayer form, and bubbles can be suppressed from being included in the raw material, for example. Accordingly, with spraying, the maximum pore diameter of the sealing layer of less than or equal to 1.0 µm can be easily achieved. In this step, the raw material is sprayed in the form of a slurry, and examples of the solvent include water and organic solvents. Among these, water is preferable. A solid to liquid ratio of the raw material slurry may be, for example, within a range of 40 mass% to 60 mass%, depending on the scale of the apparatus used to perform the spraying. A thickness of the formed raw material may be within a range of 250 µm or greater and 600 µm or less, for example. Furthermore, in this step, it is preferable that after the raw material is formed, the raw material be fired at a temperature within a range of 1000°C or higher and 1400°C or lower. The firing temperature may be appropriately prepared in accordance with the mixture ratio between Al and Ti in the raw material. The firing atmosphere is not particularly limited, and examples of the atmosphere include air and inert atmospheres. Among these, air is preferable. Note that the formation of the sealing layer may be performed after the filtration membrane is formed or may be performed before the filtration membrane is formed. Optionally, a first filtration membrane may be formed, thereafter the sealing layer may be formed, and thereafter, additionally, a second filtration membrane may be formed.

Note that in a case where the ceramic filter is to be used by being housed in a housing via an O-ring, grinding may be performed on a portion of the ceramic filter that comes into contact with the O-ring, depending on the separation properties required of the ceramic filter.

In the ceramic filter 10 and the method for manufacturing the ceramic filter 10 described above, the sealing layer formed at an end portion of the porous base member has increased durability. A reason for this is believed to be as follows. For example, since the sealing layer includes a material identical to a material of the porous base member and a material identical to a material of the filtration membrane, the sealing layer has a corrosion resistance and the like similar to those of the porous base member and the filtration membrane, and as a result, the influence on the interface between the sealing layer and the porous base member is reduced. Furthermore, the sealing layer has a reduced maximum pore diameter, which inherently suppresses a solution, such as an acid solution or an alkaline solution, from reaching the interface. Consequently, in the ceramic filter, the sealing layer formed at an end portion of the porous base member has increased durability.

It will be apparent that the present disclosure is not limited to the above-described embodiments and can be implemented in a variety of forms within the technical scope of the present disclosure.

### EXAMPLES

The following description describes experimental examples, which are examples in which ceramic filters were manufactured specifically. Note that Experimental Examples 2 to 4 correspond to examples, Experimental Examples 1, 5 to 7, and 9 correspond to comparative examples, and Experimental Example 8 corresponds to a reference example.

### (Manufacturing of Ceramic Filter)

A porous alumina support member having a monolithic cylindrical shape was produced by extrusion and firing. The firing was performed in a reducing atmosphere. The support member was 30 mm in diameter and 150 mm in length and had 37 straight through-holes (cells) having a diameter of 2.9 mm and extending in a longitudinal direction. A material used for the support member was an alumina powder having an average particle diameter of 80 µm. Note that the average particle diameter was measured by using a laser diffraction particle diameter analyzer. Next, an intermediate membrane containing alumina and titania and having an average particle diameter of 4 µm was formed in the through-holes by film deposition and firing to obtain a porous base member.

A slurry containing alumina microparticles having an average particle diameter of 0.4 µm was supplied into the through-holes of the porous base member. After the slurry was dried, the resultant was fired at 1350°C in air. Thus, a filtration membrane was formed. Sealing layers were formed at opposite ends of the monolithic-shaped base member in which the filtration membrane was formed. The sealing layers were formed by using a raw material that is a mixture of a material identical to the material of the intermediate membrane and a material identical to the material of the filtration membrane. The formation of the sealing layers was performed as follows; the raw material was slurried and sprayed onto the end portions of the base member, thereby forming raw material layers. Thereafter, the raw material layers were fired at 1350°C in air.

### (Experimental Examples 1 to 5)

In the above-described method for manufacturing a ceramic filter, a ceramic filter produced by using a raw material having a ratio B/A of 10/90 was designated as Experimental Example 1. The ratio B/A is a mass ratio of a material B, which is identical to the material of the filtration membrane, to a material A, which is identical to the material of the intermediate membrane. In the raw material, the ratio Ti/(Al + Ti), which is a molar ratio of Ti to Al and Ti, was 0.2. Furthermore, ceramic filters in which the B/A ratios were 20/80, 30/70, 40/60, and 50/50 were respectively designated as Experimental Examples 2 to 5. The molar ratios of Experimental Examples 2 to 5 were 0.4, 0.5, 0.6, and 0.7, respectively. In Examples 1 to 5, the formed sealing layers had a thickness of 250 µm. The thickness of the sealing layers was measured in the following manner. First, in a radial direction of the support member prior to the application of the sealing layer, two portions X and Y were measured with a vernier caliper. The average was designated as the radial dimension of the support member. Next, after the application of the sealing layers, the two portions X and Y were measured in the radial direction in a similar manner with a vernier caliper. The thickness of each of the sealing layers was determined as the difference between the dimensions prior to and after the application of the seal.

### (Experimental Example 6)

A ceramic filter was produced by using the raw material slurry described above and performing steps similar to those for Experimental Example 3 except that the application of the raw material to the porous base member was carried out by performing stamping five times and brush coating three times. This ceramic filter was designated as the ceramic filter of Experimental Example 6. In Example 6, the formed sealing layer had a thickness of 300 µm.

### (Experimental Example 7)

A ceramic filter was produced by using the raw material slurry described above and performing steps similar to those for Experimental Example 3 except that the formation of the raw material on the base member was carried out by dipping the end surfaces of the porous base member in the slurry three times. This ceramic filter was designated as the ceramic filter of Experimental Example 7. In Example 7, the formed sealing layer had a thickness of 300 µm.

### (Experimental Example 8)

A ceramic filter was obtained by performing steps similar to those for Experimental Example 3 except that the sealing layers were formed by thermal spraying. This ceramic filter was designated as the ceramic filter of Experimental Example 8. In thermal spraying, ceramic fine powder is heated to a molten state and then sprayed onto a surface of an object, thereby forming a thermal spray coating film. In Example 8, the formed sealing layer had a thickness of 300 µm.

### (Experimental Example 9)

A ceramic filter was produced by performing steps similar to those for Experimental Example 6 except that the raw material for the sealing layers was SiO₂-based alkali glass having an average particle diameter of 10 µm, and after being applied to the base member, the raw material was fired at 950 °C. This ceramic filter was designated as the ceramic filter of Experimental Example 9. In Example 9, the formed sealing layer had a thickness of 300 µm.

### (Surface Roughness Ra)

A surface roughness Ra (arithmetic mean roughness, µm) of a surface of the sealing layers of each of the ceramic filters produced was measured in accordance with the method specified in JIS B0601.

### (Measurement of Pore Distribution by Mercury Intrusion Porosimetry)

The pore distribution of each of the porous base members produced was measured. The pore distribution of the base member was measured with a mercury porosimeter (Autopore III 9400, manufactured by Shimadzu Corporation).

### (Corrosion Resistance Test)

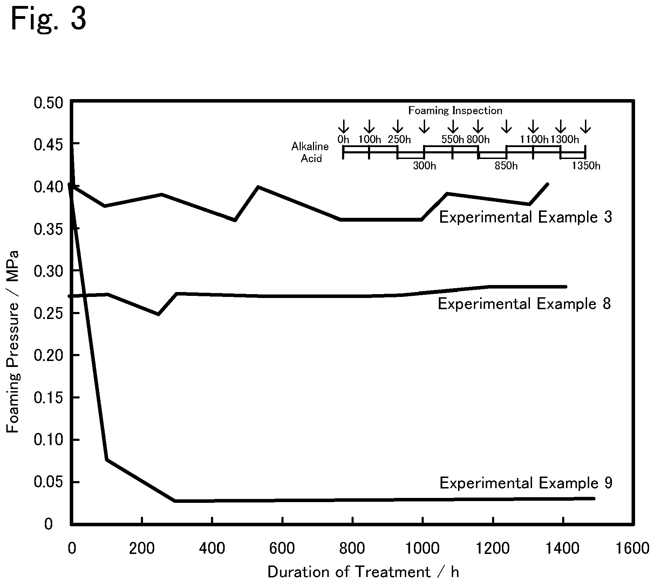

As cleaning chemicals, a 2 mass% aqueous solution of sodium hydroxide (alkaline solution) and a 4 mass% aqueous solution of nitric acid (acid solution) were prepared. The temperatures of these chemicals were adjusted to 30°C. First, the ceramic filter produced was immersed in the alkaline solution, and the solution was circulated for 250 hours. Next, the ceramic filter was immersed in the acid solution with the solution being circulated for 50 hours, then the ceramic filter was immersed in the alkaline solution with the solution being circulated for 500 hours, then the ceramic filter was immersed in the acid solution with the solution being circulated for 50 hours, then the ceramic filter was immersed in the alkaline solution with the solution being circulated for 450 hours, and then the ceramic filter was immersed in the acid solution with the solution being circulated for 50 hours. During the alkali-acid immersion and circulation cycle, the foaming pressure was measured as described below when the following time periods elapsed: 0 h, 100 h, 250 h, 300 h, 550 h, 800 h, 850 h, 1100 h, 1300 h, and 1350 h (see Fig. 3). Furthermore, a corrosion resistance was evaluated according to the following criteria. Ceramic filters for which the foaming pressure after the corrosion resistance test was reduced by no more than 10% relative to the initial foaming pressure were rated as "A", and ceramic filters for which the foaming pressure was reduced by more than 10% were rated as "C".

### (Measurement of Foaming Pressure)

The foaming pressure associated with the sealing layers was measured as follows in accordance with the Bubble Point Test Method specified in JIS K3832. First, a sealing member was attached to the outlet side of the cells of the ceramic filter, thereby closing one ends of the cells, and then an air supply member was secured to the inlet side of the cells. The air supply member had a pipe connected thereto. In this state, the sample was immersed in water at 30°C, and, from the air supply member, pressurized air was supplied into the cells. The pressure was held for 30 seconds, and then the presence or absence of bubbles formed in the sealing layers was examined (see Fig. 2). Pressurization, holding, and the examination of the presence or absence of bubbles were repeated while the pressure was increased. The pressure at which bubbles were observed was recorded as the foaming pressure. The pressure was monitored with a pressure indicator.

### (Results and Analysis)

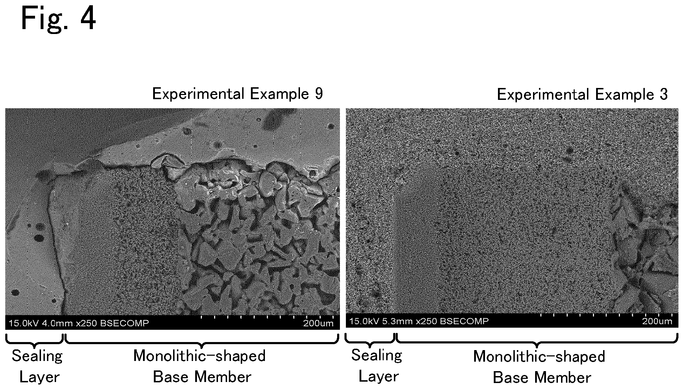

In Table 1, the following are summarized and shown: sealing layer formation processes, configurations of the sealing layers, maximum pore diameters of the sealing layers (µm), initial and post-corrosion-resistance-test foaming pressures (MPa), surface roughnesses Ra (µm), Vickers hardnesses Hv of the sealing layers (GPa), and corrosion resistance evaluation results. Fig. 3 presents graphs of Experimental Examples 3, 8, and 9 illustrating a relationship between the duration of the treatment performed with the acid and alkaline solutions and the foaming pressure. Fig. 4 presents SEM photographs of Experimental Example 9 and Experimental Example 3, in which cross sections of the porous base member and the sealing layer after the corrosion resistance test are shown. As shown in Table 1, in Experimental Example 6, in which the sealing layers were produced by coating, the initial foaming pressure was very low. Reasons for this were believed to be as follows. The amount of deposition of the raw material for the sealing layers was not consistent. In addition, as a result of the several coating operations performed, the sealing layers had a multilayer form, which resulted in an interlayer failure. Furthermore, in Experimental Example 7, in which the sealing layers were produced by dipping, the initial foaming pressure was very low. A reason for this was believed to be that a large number of internal bubbles was present, and a failure occurred in such portions. In Experimental Examples 6 and 7, no investigation was conducted regarding corrosion resistance because the initial foaming pressures were very low. In Experimental Example 8, in which the sealing layers were produced by thermal spraying, the initial foaming pressure was 0.26 MPa, which is relatively preferable. However, the maximum pore diameter was large, namely, 1.12 µm, and as a result, the initial foaming pressure did not reach 0.3 MPa. Furthermore, in Experimental Example 9, in which a glass seal was used, the initial foaming pressure was 0.45 MPa, which is preferable. However, as shown by the results of the corrosion resistance test in Table 3, in Experimental Example 9, the foaming pressure dropped at an early stage of the treatment, which indicates that corrosion resistance was low. As shown in Table 4, in Experimental Example 9, a delamination was observed at an interface between the porous base member and the sealing layer after the corrosion resistance test. In contrast, in Experimental Example 3, no delamination was observed at interfaces even after the corrosion resistance test.

On the other hand, in Experimental Examples 1 to 5, in which the sealing layers were formed by spraying, corrosion resistance was high. Among these, in Experimental Examples 2 to 4, the initial foaming pressures were not less than 0.30 MPa, which are even better initial foaming pressures. A reason for this was believed to be as follows. For example, by forming a raw material having a predetermined particle diameter ratio on the base member by spraying, the raw material can be sufficiently formed on the surface of the porous base member while good adhesion is achieved, and in addition, the raw material can be suppressed from having a multilayer form, and bubbles can be suppressed from being included in the raw material, for example. In Experimental Example 1, the foaming pressure was 0.20 MPa, which is relatively preferable. However, the number of fine particles present in the sealing layers was small, and thus the maximum pore diameter was large, namely, 1.45 µm, and as a result, the foaming pressure did not reach 0.3 MPa. Furthermore, in Experimental Example 5, the foaming pressure was low. A reason for this was believed to be as follows. For example, in Experimental Example 5, since a large number of fine particles was present in the sealing layers, formation of cracks or the like due to firing shrinkage occurred, for instance. Note that the tendencies of the foaming pressure in Experimental Examples 2 and 4 were similar to that of Experimental Example 3, and, therefore, it was believed that results comparable to the surface roughness Ra and the Vickers hardness Hv of Experimental Example 3 would be obtained in Experimental Examples 2 and 4, too.

As shown in Table 1, in Experimental Examples 2 to 4, the maximum pore diameters measured by mercury intrusion porosimetry were not greater than 1.0 µm. Accordingly, it was believed that a treatment liquid would not easily reach the interface between the porous base member and the sealing layer. Furthermore, in Experimental Examples 2 to 4, in the sealing layers, a material identical to the material of the filtration membrane and a material identical to the material of the intermediate membrane were included in a ratio, which is a mass ratio, within a range of 20/80 to 40/60. Accordingly, it was found that the ratio range is suitable for the maximum pore diameter and corrosion resistance. Furthermore, it was discovered that in cases where the ratio Ti/(Al + Ti), which is a molar ratio of Ti to Al and Ti, was within a range of 0.2 or greater and 0.7 or less or 0.4 or greater and 0.6 or less in the sealing layers, corrosion resistance was high.

**[Table 1]**

| | Formation Process | Configuration of Sealing Layers | | Maximum Pore Diameter | Initial Foaming Pressure | Post-corrosion-resistance-test Foaming Pressure | Surface Roughness Ra | Hardness Hv | Corrosion Resistance²⁾ |
|---|---|---|---|---|---|---|---|---|---|
| | | Intermediate Membrane (mass%) | Filtration Membrane (mass%) | *µ*m | MPa | MPa | *µ*m | GPa | |
| Experimental Example 1 | Spraying | 90 | 10 | 1.45 | 0.20 | 0.20 | - | - | A |
| Experimental Example 2 | | 80 | 20 | 0.91 | 0.32 | 0.32 | - | - | A |
| Experimental Example 3 | | 70 | 30 | 0.83 | 0.35 | 0.35 | 1.1 | 450 | A |
| Experimental Example 4 | | 60 | 40 | 0.94 | 0.31 | 0.31 | - | - | A |
| Experimental Example 5 | | 50 | 50 | 4.2 | 0.07 | 0.07 | - | - | A |
| Experimental Example 6 | Coating | 70 | 30 | 9.7 | 0.03 | - | - | - | - |
| Experimental Example 7 | Dipping | 70 | 30 | 7.3 | 0.04 | - | - | - | - |
| Experimental Example 8 | Thermal Spraying | Alumina | | 1.12 | 0.26 | 0.26 | 4.8 | - | A |
| Experimental Example 9 | Coating | Glass Seal | | - | 0.45 | 0.08 | 0.08 | - | C |

| | | | | | | | | | |
|---|---|---|---|---|---|---|---|---|---|
| 1) "-" means unmeasured. 2) The case where post-corrosion-resistance-test foaming pressure decreased by 10% or less compared to the initial pressure is defined as "A", and the case where the foaming pressure decreased by more than 10% is defined as "C". | | | | | | | | | |

It will be apparent that the present disclosure is not limited to the above-described examples and can be implemented in a variety of forms within the technical scope of the present disclosure.

The present application claims priority from Japanese Patent Application No. 2017-158027 filed on August 18, 2017, the entire contents of which are incorporated herein by reference.

### Industrial Applicability

Ceramic filters and methods for manufacturing the ceramic filters disclosed in this specification can be utilized in the technical field of solution filtration.

### Reference Signs List

10 Ceramic filter, 11 Support member, 12 Intermediate membrane, 13 Porous base member, 15 Filtration membrane, 16 Cell, 20 Sealing layer, 30 Foaming pressure gauge, 31 Air supply member, 32 Sealing member

## Claims

1. A ceramic filter comprising:
a base member formed of a ceramic porous body;
a filtration membrane formed on a surface of the base member; and
a sealing layer formed at an end portion of the base member, the sealing layer including a material identical to a material included in the base member and a material identical to a material included in the filtration membrane, the sealing layer having a maximum pore diameter of less than or equal to 1.0 µm as measured by mercury intrusion porosimetry.

2. The ceramic filter according to Claim 1, wherein the maximum pore diameter of the sealing layer is less than or equal to 0.85 µm.

3. The ceramic filter according to Claim 1 or 2, wherein the sealing layer includes at least one of aluminum oxide and titanium oxide.

4. The ceramic filter according to any one of Claims 1 to 3, wherein a molar ratio of Ti to Al and Ti in the sealing layer is within a range of 0.4 ≤ Ti/(Al + Ti) ≤ 0.6.

5. The ceramic filter according to any one of Claims 1 to 4, wherein the sealing layer has a thickness within a range of 150 µm or greater and 500 µm or less.

6. The ceramic filter according to any one of Claims 1 to 5, wherein
the base member includes a support member and an intermediate membrane, the intermediate membrane being formed adjacent to a surface of the support member and having a pore diameter smaller than a pore diameter of the support member, and
the sealing layer includes a material in which the material identical to the material of the filtration membrane and a material identical to a material of the intermediate membrane are included in a mass ratio within a range of 20/80 to 40/60.

7. The ceramic filter according to any one of Claims 1 to 6, wherein a foaming pressure is greater than or equal to 0.3 MPa, the foaming pressure being a pressure at which bubbles are formed from the sealing layer when pressurized air is supplied to the ceramic filter in a state in which an end surface is sealed.

8. A method for manufacturing a ceramic filter, the ceramic filter including a base member and a filtration membrane, the base member being formed of a ceramic porous body, the filtration membrane being formed on a surface of the base member, the method comprising:
a sealing layer forming step of forming a raw material on an end portion of the base member by spraying and thereafter firing the raw material, the raw material including a material identical to a material of the base member and a material identical to a material of the filtration membrane.

9. The method for manufacturing a ceramic filter according to Claim 8, wherein
the base member includes a support member and an intermediate membrane, the intermediate membrane being formed adjacent to a surface of the support member and having a pore diameter smaller than a pore diameter of the support member, and
in the raw material used in the sealing layer forming step, the material identical to the material of the filtration membrane and a material identical to a material of the intermediate membrane are included in a mass ratio within a range of 20/80 to 40/60.

10. The method for manufacturing a ceramic filter according to Claim 8 or 9, wherein a molar ratio of Ti to Al and Ti in the raw material used in the sealing layer forming step is within a range of 0.4 ≤ Ti/(Al + Ti) ≤ 0.6.
